(19) Europäisches Patentamt
European Patent Office
Office européen des brevets

(11) **EP 2 439 878 B1**

(12) **EUROPEAN PATENT SPECIFICATION**

(45) Date of publication and mention
of the grant of the patent:
**10.08.2016 Bulletin 2016/32**

(51) Int Cl.:
***H04L 12/24*** *(2006.01)*       ***H04L 12/801*** *(2013.01)*
***H04L 12/835*** *(2013.01)*      ***H04L 12/841*** *(2013.01)*
***H04L 12/825*** *(2013.01)*

(21) Application number: **09845712.0**

(22) Date of filing: **29.10.2009**

(86) International application number:
**PCT/CN2009/074699**

(87) International publication number:
**WO 2010/142103 (16.12.2010 Gazette 2010/50)**

(54) **METHOD AND SYSTEM FOR NETWORK CONGESTION MANAGEMENT**

VERFAHREN UND SYSTEM ZUR ÜBERLASTUNGSVERWALTUNG IN EINEM NETZWERK

PROCÉDÉ ET SYSTÈME DE GESTION D'UN ENGORGEMENT DE RÉSEAU

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.06.2009 CN 200910108053**

(43) Date of publication of application:
**11.04.2012 Bulletin 2012/15**

(73) Proprietor: **ZTE Corporation
Shenzhen, Guangdong 518057 (CN)**

(72) Inventor: **SONG, Xiaoli
Shenzhen
Guangdong 518057 (CN)**

(74) Representative: **Manitz, Finsterwald & Partner
GbR
Martin-Greif-Strasse 1
80336 München (DE)**

(56) References cited:
**CN-A- 101 150 521       CN-A- 101 179 831
CN-A- 101 253 729       US-A1- 2005 141 419
US-A1- 2007 081 454**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to the data communication field, and in particular, to a method and system for network congestion management. The features of the preamble of the independent claims are known from US 2007/081454 A1.

Background of the related art

With the rapid development of internet technology, the data service flow in the network becomes larger and larger, thus causing the network congestion problem to be more and more apparent. At the mean time, the users' requirements on the network performance become higher and higher. The Ethernet with massive data transmission is faced with a severe challenge about how to realize package forwarding with a high speed and a low delay.

At present, many technologies for congestion management and flow control are used to solve the network congestion problem, for example, IEEE (Institute of Electrical and Electronics Engineers) link layer flow control standards (802.3x), RED (Random Early Detection), ECN (Explicit Congestion Notification) and so on. In these technical schemes, the congestion management mechanism with a backward congestion notifying function has drawn much attention since use of this method can enable a network entity causing the congestion to know the congestion status in time and take corresponding measures to control the data transmission rate. The main concept of backward congestion management is that when a core network entity configured with a congestion detection function detects the congestion status through monitoring the queue, a congestion notification message is created, and the network entity causing the congestion is informed of the extent of network congestion through the message such that the network entity reduces its data transmission rate to alleviate the congestion of the core network entity.

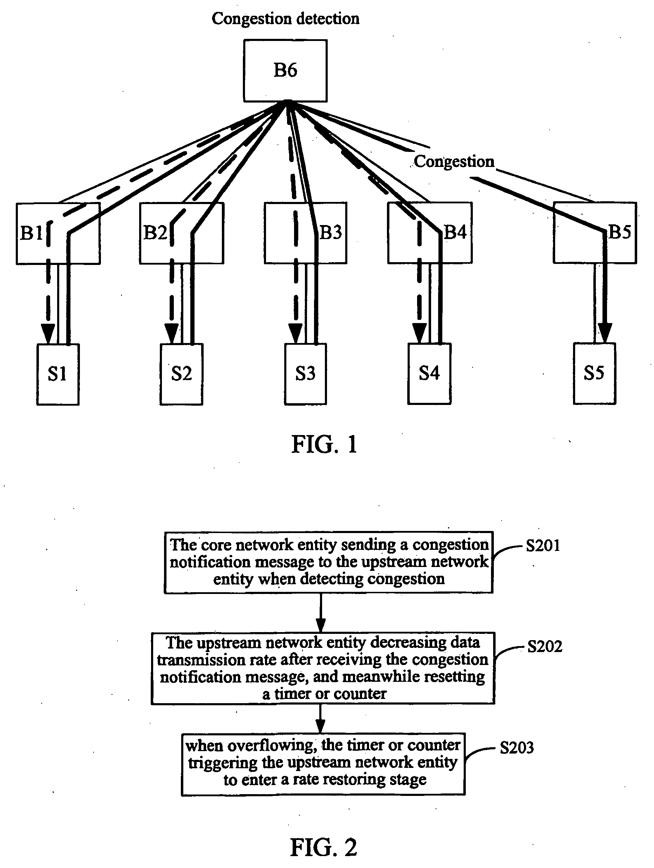

FIG. 1 illustrates the signal flow directions in a backward congestion management mechanism in a network provided in the related art. The congestion management mechanism in this figure is implemented by a series of network devices interconnected with each other, wherein, the core switcher B6 is a core network entity having a congestion detection function, edge switchers B1, B2, B3, B4 and corresponding end nodes S1, S2, S3, S4 capable of responding to a congestion notification are upstream devices of B6 or are called as upstream network entities, the edge switcher B5 and its corresponding end node S5 are downstream devices of B6 or are called as downstream network entities. The solid line arrow in this figure represents user data flows, while the dashed line arrow represents a congestion notification signal. As can be seen from this figure, the user data flows transmitted from the upstream end nodes S1, S2, S3, S4 to S5 converge at the core switcher B6 via the edge switchers B1, B2, B3, B4, causing occurrence of congestion on the link between the core switcher B6 and the edge switcher B5, and when the core network entity B6 configured with the congestion detection function detects a congestion status of the queue, its upstream devices S1, S2, S3, S4 are informed by a congestion notification message such that each upstream device controls its own data transmission rate.

However, the above mechanism does not define a corresponding message for notifying the network entity to increase data transmission rate, thereby leading to the loss of network bandwidth of the network entity whose transmission rate is decreased previously, since the transmission rate is not restored in time after the congestion is removed, and further influencing the performance of the network severely.

Summary of the Invention

The purpose of the present invention is to provide a method and system for network congestion management as defined in the independent claims, and is intended to solve the problem in the related art that the data transmission rate is decreased when the network has congestion in the network congestion management but cannot be restored by itself, thus causing waste of a large amount of network bandwidth.

The beneficial effects of the present invention are that the congestion status of the network can be monitored efficiently, and the data transmission rate of the upstream network entity is decreased during congestion while the data transmission rate is increased shortly after the congestion is eliminated, thereby reducing loss and waste of bandwidth, and maximizing the utilization ratio of the network bandwidth.

Brief Description of Drawings

FIG. 1 illustrates the signal flow directions in a backward congestion management mechanism in a network provided in the related art;

FIG. 2 is a flowchart of the method for network congestion management provided in an example of the present invention;

FIG. 3 is a flowchart of the specific method for network congestion management provided in an example of the present invention;

FIG. 4 is a flowchart of the steps in the initiative increasing sub-stage of data transmission rate in the method for network congestion management provided in an example of the present invention;

FIG. 5 illustrates the change of the data transmission rate during the process of network congestion management provided in an example of the present invention;

FIG. 6 illustrates the possibility of increasing the utilization ratio of the network bandwidth in the method for network congestion management provided in an example of the present invention;

FIG. 7 illustrates the change of the data transmission rate when the bandwidth is expanded in the method for network congestion management provided in an example of the present invention;

FIG. 8 illustrates the composition and structure of the system for network congestion management provided in an example of the present invention.

Preferred Embodiments of the Invention

In order to make the purposes, technical schemes and advantages of the present invention clearer and more intelligible, the present invention will be further described below with reference to the drawings. It should be understood that the specific examples described here are only used to explain the present invention, rather than to limit the present invention.

In an example of the present invention, when a core network entity detects occurrence of congestion in the network, it sends a congestion notification message to an upstream network entity; the upstream network entity decreases the data transmission rate upon receiving the congestion notification message; after a certain period of time or after a certain number of data packets are transmitted, the upstream network entity increases the data transmission rate. Thus, after the congestion is eliminated, the upstream network entity increases the data transmission rate, which reduces waste of bandwidth.

FIG. 2 is a flowchart of the method for network congestion management provided in an example of the present invention. This method may be applied to a network composed of interconnected network entities. The network may comprise upstream network entities capable of responding to a congestion notification message and a core network entity having a congestion detection function. Upstream network entities converge data information flows to the core network entity, so congestion will occur due to excessive data information when the core network entity forwards them out. The steps of the method for network congestion management are as follows:

In step S201, the core network entity sends a congestion notification message to the upstream network entity when detecting a congestion status.

In step S202, the upstream network entity decreases its data transmission rate by a certain step length according to the received congestion notification message, and meanwhile resets a timer or a counter for counting the number of data packets.

The values of the timer and counter may be specifically configured according to the actual minimum congestion detection probability of the network where they are located. If it is supposed that the occurrence probability of network congestion in the network is 1%, the overflow value of the timer or counter is configured to transmit 100 packets or be a time length for transmitting 100 packets. If the upstream network entity does not receive the congestion notification message within a set period of time, it can be judged that the congestion of the network has been removed. The details are as described below.

The upstream network entity decreases its data transmission rate by a certain step length according to the received congestion notification message, and meanwhile resets the timer or the counter for counting the number of data packets; if the upstream network entity receives a congestion notification message after the timer or counter is reset and before it overflows, the upstream network entity decreases its data transmission rate by a certain step length again according to the received congestion notification message, and meanwhile resets the timer or counter for counting the number of data packets again. The details are as described below.

In step S203, when the timer or counter overflows, the upstream network entity is triggered to enter a rate restoring stage.

The upstream network entity entering a rate restoring stage may be increasing its data transmission rate by a predetermined step length, or restoring its data transmission rate back to its normal value at one time, i.e., restoring the data transmission rate to the rate value in a normal state of the network.

In order to keep the smoothness of the network and improve the utilization ratio of the network bandwidth, the upstream network entity entering a rate restoring stage may also involve restoring the data transmission rate by way of progressively increasing the value of the data transmission rate. That is, in this step, the upstream network entity resets the timer and counter again at the meantime of increasing its data transmission rate by a predetermined step length until the data transmission rate is increased for a predetermined number of times so that the data transmission rate reaches a predetermined normal value. In this way, if there is no congestion status during the period between reset and overflow of the timer or counter, the data transmission rate of the upstream data transmission device will finally reach a predetermined normal value. The details are as described below.

The network is managed in real time through the above method for network congestion management, and once the network has congestion, the data transmitted by each upstream network entity are adjusted to eliminate the congestion; meanwhile, the opportunities for increasing the data transmission rate are provided according to the actual congestion probability of the network or the requirements for network rate adjustment so as to make full use of network bandwidth and reduce occurrences of network congestion.

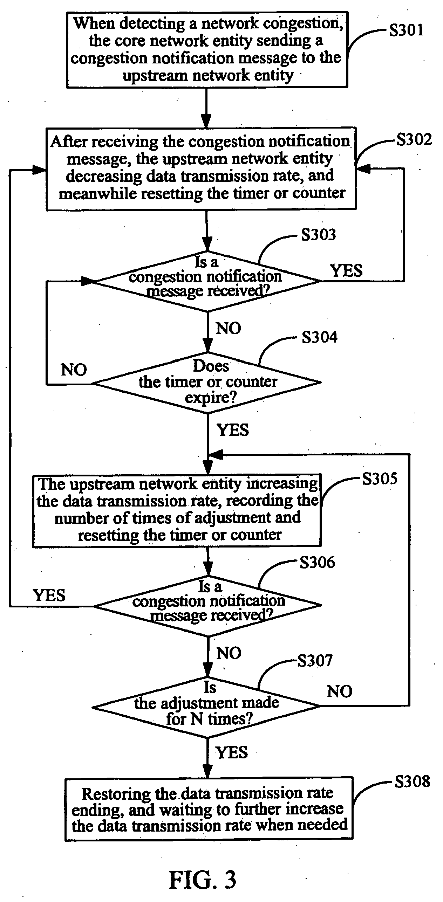

FIG. 3 is a flowchart of the specific method for network congestion management provided in an example of the present invention.

In step S301: when detecting a congestion status, the core network entity informing the upstream network entity causing the congestion through a corresponding congestion notification message.

In step S302: after receiving the congestion notification message transmitted back by the core network entity, the upstream network entity decreasing its data transmission rate according to the instruction, and meanwhile resetting the timer/counter T1 for judging removal of congestion.

In step S303: during the operation period after the timer/counter T1 is reset and before it overflows, judging whether a congestion notification message is received or not, if yes, going to step S302; otherwise, proceeding to step S304.

In step S304: judging whether the timer/counter T1 overflows or not.

The timer/counter T1 will overflow when it expires, and if it overflows, it indicates that no congestion notification message is received within a timing period, in which case it may be decided that the network congestion has been removed, and the step S305 is executed; otherwise, going to step S303.

Step S305: the upstream network entity increasing the data transmission rate, recording the number of times of adjustment and resetting the timer or counter.

If the upstream network entity judges that the network congestion has been removed, it increases the data transmission rate according to a dynamic rate adjusting algorithm. The dynamic rate adjusting algorithm is a predetermined algorithm for progressively restoring the data transmission rate to the predetermined normal value, for example, this algorithm is to increase the current rate to 1/2 x (the rate before the latest decrease + the current rate) to restore the rate, record the number of times of adjustment (add 1 to the number of times of adjustment every time this step is executed), and reset T1.

Step S306: judging whether a congestion notification message is received within T1.

This step is mainly intended to tentatively restore the data transmission rate to prevent occurrence of new congestion after the data transmission rate is restored. If a congestion notification message is received, it indicates that the pace for rate restoring is slightly big, going to step S302; if no congestion notification message is received, it indicates that the network after adjustment operates normally, executing step S307 sequentially.

Step S307: whether adjustment is made for N times (the number of times of adjustment is equal to N).

Configuration of N times is mainly used for progressive increase of the rate during the process of bandwidth restoring, and the value of N may be configured according to the requirement for network rate adjustment. Here, it is defaulted that N is 5, and if adjustment has been made for N times, executing step S308 sequentially, otherwise, going to step S305 to proceed with the rate adjustment.

Step S308: the stage of restoring the data transmission rate ending.

At this moment, the network enters a normal operation state. In the above specific method for network congestion management, when the reset timer or counter overflows after the upstream network entity receives the congestion notification, the upstream network entity is triggered to enter a rate restoring stage. The rate restoring stage also uses the timer or counter to control the time interval between cycles so that the upstream network entity progressively restores to the predetermined normal value. This cycle process is called as a rapid restoring sub-stage. The rapid restoring sub-stage includes N cycles, and in each cycle the upstream network entity increases its data transmission rate by a corresponding step length according to a predetermined algorithm. The corresponding step length increased according to a predetermined algorithm is: a step length calculated according to the predetermined algorithm during each time of rate increase for progressively restoring the data transmission rate to a predetermined normal value.

When the upstream network entity needs to increase its data transmission rate to make better use of the bandwidth and improve the utilization ratio of the bandwidth, it may be triggered to enter an initiative increasing sub-stage of data transmission rate in the method for network congestion management, i.e., entering an initiative increasing sub-stage of the rate restoring stage; the details are as described below.

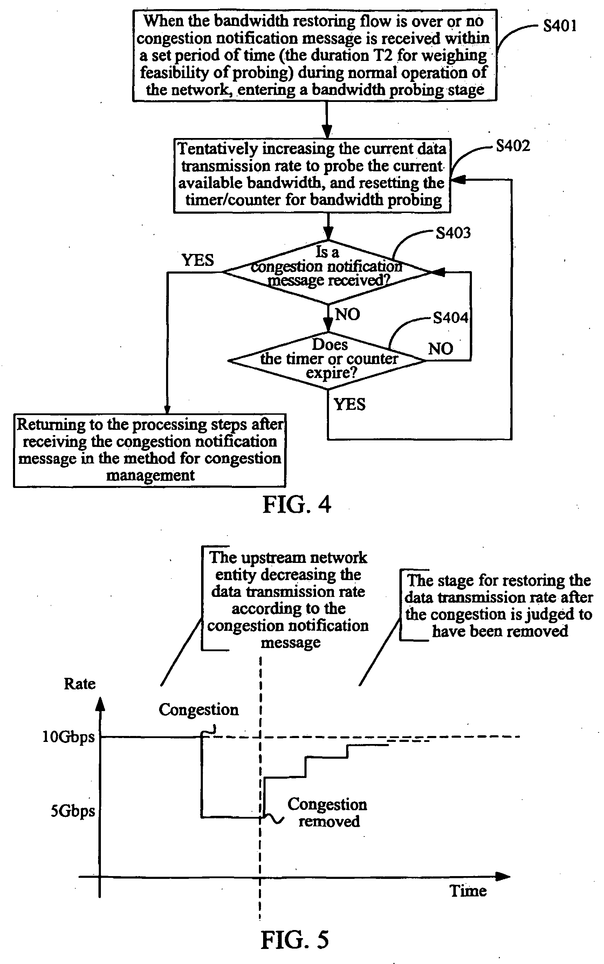

FIG. 4 is a flowchart of the steps in the initiative increasing sub-stage of data transmission rate in the method for network congestion management provided in an example of the present invention.

In step S401: when the bandwidth restoring flow is over or no congestion notification message is received within a set period of time (the duration T2 for weighing feasibility of probing, which may be configured and depends on the frequency of bandwidth probing expected by the user) during normal operation of the network and the data transmission rate needs to be increased, triggering to enter a bandwidth probing stage, i.e., entering the part of increasing the bandwidth utilization ratio in the method for network congestion management.

In step S402: tentatively increasing the current data transmission rate to probe the current available bandwidth, and resetting the timer/counter T2 for bandwidth probing.

Increasing the current data transmission rate tentatively means that the upstream network entity increases its data transmission rate by a corresponding step length according to a predetermined algorithm; the corresponding step length increased according to the predetermined algorithm is: the step length to be increased in the present cycle calculated according to the predetermined algorithm at each cycle for rate increase so that the data transmission rate progressively recovers to a certain predetermined value initiatively.

In step S403: judging whether a congestion notification message is received during the operation period after the timer/counter T2 is reset and before it overflows, if yes (the network has congestion or the probing fails), going to the flow of congestion processing and bandwidth restoring after reception of the congestion notification message (i.e., step S302) in the method for congestion management shown in FIG. 3; if not (the network is normal or the probing succeeds), executing step S404 sequentially.

Step S404: judging whether the timer/counter for weighing probing overflows, if yes, going to step S402 to probe available bandwidth again; otherwise, going to step S403 to continue to monitor the situation of network operation, i.e., monitoring whether network is congested.

The above initiative increasing sub-stage of data transmission rate in the method for network congestion management is to progressively increase the data transmission rate of the upstream network entity until the network has congestion. In the above initiative increasing sub-stage of data transmission rate, the number of times for circularly increasing the data transmission rate and the step length for increasing the data transmission rate may also be set. The setting of the number of cycles may be configured to be M cycles in the similar way as in the rapid restoring sub-stage, record is made after each cycle, and the process quit when it is judged that the circulation has been made for M times; the step length for increasing the data transmission rate is set to be a step length calculated according to the predetermined algorithm during each cycle of rate increase for progressively restoring the data transmission rate to a certain predetermined value initiatively.

Of course, the step S401 may be executed when it is judged that the timer/counter overflows in the step S404 of judging whether the timer/counter for weighing probing overflows so that the upstream network entity only increases the data transmission rate to the desired rate and then stops increasing, which will make the network more stable. The desired rate of the upstream network entity may be determined by the data to be transmitted. A person having ordinary skill in the art can appreciate that the above equivalent variation shall fall within the protection scope of the present invention as long as it can achieve further increase of the utilization ratio of the network bandwidth.

FIG. 5 illustrates the change of the data transmission rate during the process of network congestion management provided in an example of the present invention. The original transmission rate of the network entity is 10Gbps, and after the network congestion occurs, the network entity receives a congestion notification message for notifying it to decrease its rate, decreases its rate to 5Gbps, and meanwhile, starts the timer/counter for judging removal of congestion. If no congestion notification message is received when the timer/counter expires, it indicates that the congestion is restored, a dynamic rate adjustment is activated to increase the rate to

$$\frac{1}{2} \times (\text{the rate before the latest decrease + the current rate}),$$ i.e., increase the rate to $\frac{1}{2} \times$

$( 10+5 ) =7.5\text{Gbps}$ for the first time, $\frac{1}{2} \times ( 10+7.5 ) =8.75\text{Gbps}$ for the second time, $\frac{1}{2} \times$

$( 10+8.75 )=9.375$ for the third time......the number of times for adjustment is preset to be N to make the rate approximate to the rate before the last rate decrease.

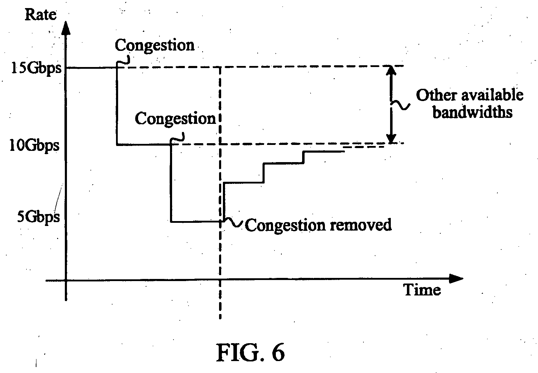

FIG. 6 illustrates the possibility of increasing the utilization ratio of the network bandwidth in the method for network congestion management provided in an example of the present invention. In the figure, the network entity decreases the rate twice due to congestion, but if the data transmission rate is restored by way of increasing the rate to 1/2 x (the rate before the latest decrease + the current rate), the data transmission rate is only restored to be approximate to the rate before the last rate decrease, i.e., 10Gbps, thus causing loss of nearly 5Gbps available bandwidth before the first rate decrease. In addition, when the network operates normally, there may be much potential bandwidth in the network due to decrease of service amount in a certain period of time or in a certain region, therefore, it is very feasible to probe the network bandwidth.

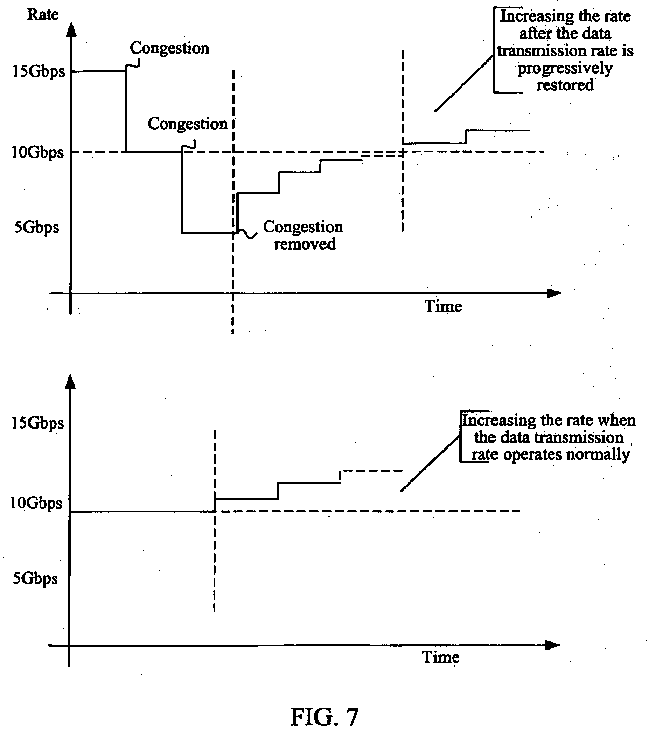

FIG. 7 illustrates the change of the data transmission rate when the bandwidth is expanded in the method for network congestion management provided in an example of the present invention. After the bandwidth of the network entity is completely restored, a bandwidth probing stage is started according to practical requirements, which may be implemented by increasing the current rate by a specific constant value. This value may be configured by the user freely, and in this example, this value is supposed to be 1Gbps. As shown in FIG. 7, the rate is increased to be approximate to 11 Gbps after the first probing, and if this probing does not cause congestion, then the second probing is implemented to adjust the current rate to 12Gbps, and so forth. When the rate is increased to a certain extent to cause network congestion, the congestion management flow will be started and the rate will be decreased appropriately according to the extent of the congestion; when the network operates normally, and the timer/counter for weighing feasibility of bandwidth probing expires, the network entity is triggered to enter a bandwidth probing stage to increase the current rate by a specific constant value; circulation may be made repeatedly to progressively increase the data transmission rate to improve the bandwidth utilization ratio; the details are as described above and will not be repeated here.

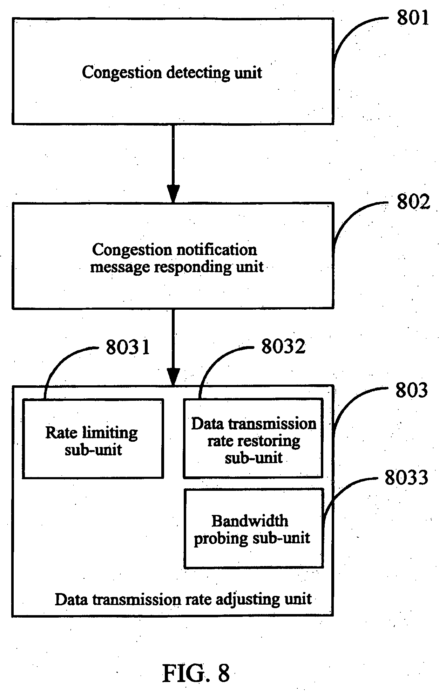

FIG. 8 illustrates a system for network congestion management provided in an example of the present invention. This system is placed within the network or the network entity. The network comprises an upstream network entity and a core network entity for converging data transmitted by the upstream network entity. The system comprises:

a congestion detecting unit 801 used to check status of the network and send a congestion notification message to the upstream network entity when the congestion status is detected; the details are as described above.

a congestion notification message responding unit 802 used to reset a timer or a counter for counting a number of data packets according to the received congestion notification message; the details are as described above.

a data transmission rate adjusting unit 803 used to decrease a data transmission rate after the upstream network entity receives the congestion notification message sent by the core network entity, or increase the data transmission rate of the upstream network entity by a corresponding step length according to a predetermined algorithm when the timer or the counter overflows; the details are as described above.

The data transmission rate adjusting unit 803 may comprise: a rate limiting sub-unit 8031, a data transmission rate restoring sub-unit 8032 and a bandwidth probing sub-unit 8033.

The rate limiting sub-unit 8031 is used to decrease the data transmission rate after the upstream network entity receives a congestion notification sent by the core network entity; the details are as described above.

The data transmission rate restoring sub-unit 8032 is used to increase the data transmission rate of the upstream network entity by a predetermined step length when the timer or counter overflows and before the data transmission rate is restored to the normal rate value, and meanwhile reset the timer or counter again; the details are as described above.

The bandwidth probing sub-unit 8033 is used to increase the data transmission rate of the upstream network entity by a certain step length when the upstream network entity transmits data at a rate greater than equal to the normal rate value for a certain period of time and the data transmission rate needs to be increased; the details are as described above.

In the examples of the present invention, the upstream network entity resets the timer or counter at the mean time of decreasing the data transmission rate according to the received congestion notification message, and the data transmission rate is restored when the timer or counter overflows, in which way the waste of bandwidth caused by decrease of data transmission rate in congestion management is reduced; the timer or counter is set according to the minimum congestion detection probability of the network and/or the requirements for network rate adjustment, which will improve the utilization ratio of the network bandwidth more effectively; if the network still has congestion after the timer or counter is reset and before it overflows, the upstream network entity continues to decrease the data transmission rate according to the received congestion notification message, and the data transmission rate for uploading data may be adjusted continuously to eliminate network congestion; restoring the data transmission rate progressively can achieve restoring of the bandwidth more stably; the initiative increasing sub-stage further included in the rate restoring stage can tentatively can tentatively increase the data transmission rate and thereby improve the utilization ratio of bandwidth.

The above examples are only preferred examples of the present invention, and are not intended to limit the present invention.

Industrial Applicability

In the present invention, the congestion status of the network can be monitored efficiently, and the data transmission rate of the upstream network entity is decreased during congestion while the data transmission rate is increased shortly after the congestion is eliminated, thereby reducing loss and waste of bandwidths, and maximizing the utilization ratio of the network bandwidth.

**Claims**

1. A method for managing congestion in a network, the network comprising a core network entity (B6) having a congestion detection function and an upstream network entity (B1, B2, B3, B4, S1, S2, S3, S4) capable of responding to a congestion notification message, the method comprising following steps of:

   when detecting a congestion status, the core network entity sending (S201, S301) a congestion notification message to an upstream network entity;
   the upstream network entity decreasing (S202, S302) its data transmission rate by a certain step length according to the received congestion notification message, and meanwhile resetting (S202, S302) a timer or a counter for counting a number of data packets;
   triggering (S203) the upstream network entity to enter a rate restoring stage when the timer or the counter overflows;

   **characterized in that**

   the rate restoring stage comprises a rapid restoring sub-stage, which includes N cycles, and in each cycle the upstream network entity increases its current data transmission rate by a corresponding step length according to a predetermined algorithm, wherein in each cycle said algorithm increases the current data transmission rate to 1/2 x (the data transmission rate before the latest decrease + the current data transmission rate).

2. The method according to claim 1, wherein, an overflow value of the timer or the counter is specifically configured according to a minimum congestion detection probability of the network and/or requirement for rate adjustment of the network.

3. The method according to claim 1, wherein, when the upstream network entity receives the congestion notification message after the timer or the counter is reset and before the timer or the counter overflows, the upstream network entity decreases its data transmission rate by a certain step length again according to the received congestion notification message, and meanwhile resets the timer or the counter for counting the number of data packets again.

4. The method according to claim 1, wherein, the rate restoring stage further comprises an initiative increasing sub-stage; the upstream network entity enters the initiative increasing sub-stage after completing the cycles in the rapid restoring sub-stage; the initiative increasing sub-stage comprises M cycles, and in each cycle the upstream network entity increases its data transmission rate by a corresponding step length according to a predetermined algorithm.

5. The method according to claim 1 or 4, wherein, the corresponding step length increased according to a predetermined algorithm is: a step length calculated according to the predetermined algorithm during each time of rate increase for progressively restoring the data transmission rate to a predetermined normal value or for progressively restoring to a certain predetermined value initiatively.

6. The method according to claim 1 or 4, wherein, for the N cycles included in the rapid restoring sub-stage and the M cycles included in the initiative increasing sub-stage, an interval between cycles is a period of time between reset and overflow of the timer or the counter; the period of time between the reset and the overflow of the timer or the counter is specifically configured according to the minimum congestion detection probability of the network and/or the requirement for rate adjustment of the network.

7. A system for managing congestion in a network, the network comprising an upstream network entity (B1, B2, B3, B4, S1, S2, S3, S4) and a core network entity (B6) for converging data transmitted by the upstream network entity, the system comprising:

   a congestion detecting unit, which is configured to check congestion status of the network and send a congestion notification message to the upstream network entity when detecting a congestion status;
   a congestion notification message responding unit, which is configured to reset a timer or a counter for counting a number of data packets according to the received congestion notification message;
   a data transmission rate adjusting unit, which is configured to decrease a data transmission rate after the upstream network entity receives the congestion notification message sent by the core network entity, or increase the data transmission rate of the upstream network entity by a corresponding step length according to a predetermined algorithm when the timer or the counter overflows,

   wherein the data transmission rate adjusting unit comprises:

   a rate limiting sub-unit, which is configured to decrease the data transmission rate after the upstream network entity receives the congestion notification sent by the core network entity;

   **characterized by**

   a data transmission rate restoring sub-unit, which is configured to increase a current data transmission rate of the upstream network entity by a corresponding step length according to a predetermined algorithm when the timer or the counter overflows and before the data transmission rate is restored to a predetermined normal rate, and meanwhile reset the timer or the counter again, wherein said algorithm increases the current data transmission rate to 1/2 x (the data transmission rate before the latest decrease + the current data transmission rate).

8. The system according to claim 7, wherein, the data transmission rate adjusting unit further comprises:

   a bandwidth probing sub-unit, which is configured to increase the data transmission rate of the upstream network entity by a corresponding step length according to a predetermined algorithm when the upstream network entity transmits data at a rate greater than or equal to the normal rate for a certain period of time and the data transmission rate needs to be increased.

**Patentansprüche**

1. Verfahren zur Verwaltung einer Überlastung in einem Netz, wobei das Netz eine Kernnetzentität (B6) mit einer Überlastungsdetektionsfunktion und eine stromaufwärtige Netzentität (B1, B2, B3, B4, S1, S2, S3, S4), die auf eine Überlastungsankündigungsnachricht reagieren kann, umfasst, wobei das Verfahren die folgenden Schritte umfasst, dass:

   wenn ein Überlastungsstatus detektiert wird, die Kemnetzentität eine Überlastungsankündigungsnachricht an eine stromaufwärtige Netzentität sendet (S201, S301);
   die stromaufwärtige Netzentität ihre Datenübertragungsrate um eine bestimmte Schrittlänge gemäß der empfangenen Überlastungsankündigungsnachricht verringert (S202, S302), und unterdessen einen Timer oder einen Zähler zum Zählen einer Anzahl von Datenpaketen zurücksetzt (S202, S302);
   die stromaufwärtige Netzentität veranlasst wird (S203), sich in eine Ratenzurückstellungsphase zu begeben, wenn der Timer oder der Zähler überläuft;

**dadurch gekennzeichnet, dass**

die Ratenzurückstellungsphase eine Subphase einer schnellen Zurückstellung umfasst, die N Zyklen umfasst, und die stromaufwärtige Netzentität in jedem Zyklus ihre aktuelle Datenübertragungsrate gemäß einem vorbestimmten Algorithmus um eine entsprechende Schrittlänge erhöht, wobei der Algorithmus in jedem Zyklus die aktuelle Datenübertragungsrate auf 1/2 x (die Datenübertragungsrate vor der jüngsten Verringerung + die aktuelle Datenübertragungsrate) erhöht.

2.  Verfahren nach Anspruch 1,
    wobei ein Überlaufwert des Timers oder des Zählers spezifisch gemäß einer minimalen Überfastungsdetektionswahrscheinlichkeit des Netzes und/oder einer Anforderung hinsichtlich einer Ratenanpassung des Netzes konfiguriert wird.

3.  Verfahren nach Anspruch 1,
    wobei, wenn die stromaufwärtige Netzentität die Überlastungsankündigungsnachricht empfängt, nachdem der Timer oder der Zähler zurückgesetzt wurde und bevor der Timer oder der Zähler überläuft, die stromaufwärtige Netzentität ihre Datenübertragungsrate gemäß der empfangenen Überfastungsankündigungsnachricht wieder um eine bestimmte Schrittlänge verringert, und unterdessen den Timer oder den Zähler zum Zählen der Anzahl von Datenpaketen wieder zurücksetzt.

4.  Verfahren nach Anspruch 1,
    wobei die Ratenzurückstellungsphase ferner eine Subphase einer einleitenden Erhöhung umfasst; sich die stromaufwärtige Netzentität nach dem Abschluss der Zyklen in der Subphase einer schnellen Zurückstellung in die Subphase einer einleitenden Erhöhung begibt; die Subphase einer einleitenden Erhöhung M Zyklen umfasst, und die stromaufwärtige Netzentität in jedem Zyklus ihre Datenübertragungsrate gemäß einem vorbestimmten Algorithmus um eine entsprechende Schrittlänge erhöht.

5.  Verfahren nach Anspruch 1 oder 4,
    wobei die gemäß einem vorbestimmten Algorithmus erhöhte entsprechende Schrittlänge umfasst: eine Schrittlänge, die gemäß dem vorbestimmten Algorithmus jedes Mal während einer Ratenerhöhung berechnet wird, um die Datenübertragungsrate schrittweise auf einen vorbestimmten normalen Wert zurückzustellen, oder zur einleitenden schrittweisen Zurückstellung auf einen bestimmten vorbestimmten Wert.

6.  Verfahren nach Anspruch 1 oder 4,
    wobei für die N Zyklen, die in der Subphase einer schnellen Zurückstellung umfasst sind, und die M Zyklen, die in der Subphase einer einleitenden Erhöhung umfasst sind, ein Intervall zwischen Zyklen eine Zeitdauer zwischen Zurücksetzen und Überlauf des Timers oder des Zählers ist; die Zeitdauer zwischen dem Zurücksetzen und dem Überlauf des Timers oder des Zählers gemäß der minimalen Überlastungsdetektionswahrscheinlichkeit des Netzes und/oder der Anforderung hinsichtlich einer Ratenanpassung des Netzes spezifisch konfiguriert wird.

7.  System zur Verwaltung einer Überlastung in einem Netz, wobei das Netz eine stromaufwärtige Netzentität (B1, B2, B3, B4, S1, S2, S3, S4) und eine Kemnetzentität (B6), um durch die stromaufwärtige Netzentität übertragene Daten zusammenlaufen zu lassen, umfasst, wobei das System umfasst:

    eine Überlastungsdetektionseinheit, die ausgestaltet ist, um einen Überlastungsstatus des Netzes zu überprüfen und eine Überlastungsankündigungsnachricht an die stromaufwärtige Netzentität zu senden, wenn ein Überfastungsstatus detektiert wird;
    eine Einheit einer Reaktion auf eine Überlastungsankündigungsnachricht, die ausgestaltet ist, um einen Timer oder einen Zähler zum Zählen einer Anzahl von Datenpaketen gemäß der empfangenen Überlastungsankündigungsnachricht zurückzusetzen;
    eine Datenübertragungsraten-Anpassungseinheit, die ausgestaltet ist, um eine Datenübertragungsrate, nachdem die stromaufwärtige Netzentität die durch die Kernnetzentität gesendete Überlastungsankündigungsnachricht empfangen hat, zu verringert, oder die Datenübertragungsrate der stromaufwärtigen Netzentität um eine entsprechende Schrittlänge gemäß einem vorbestimmten Algorithmus zu erhöhen, wenn der Timer oder der Zähler überläuft,

wobei die Datenübertragungsraten-Anpassungseinheit umfasst:

eine Ratenbegrenzungs-Subeinheit, die ausgestaltet ist, um die Datenübertragungsrate zu verringern, nachdem die stromaufwärtige Netzentität die durch die Kemnetzentität gesendete Überlastungsankündigung empfangen hat;

**gekennzeichnet durch**

eine Datenübertragungsraten-Zurückstellungssubeinheit, die ausgestaltet ist, um eine aktuelle Datenübertragungsrate der stromaufwärtigen Netzentität gemäß einem vorbestimmten Algorithmus um eine entsprechende Schrittlänge zu erhöhen, wenn der Timer oder der Zähler überläuft und bevor die Datenübertragungsrate auf eine vorbestimmte normale Rate zurückgestellt wird, und unterdessen den Timer oder den Zähler wieder zurückzusetzen, wobei der Algorithmus die aktuelle Datenübertragungsrate auf 1/2 x (die Datenübertragungsrate vor der jüngsten Verringerung + die aktuelle Datenübertragungsrate) erhöht.

8. System nach Anspruch 7,
wobei die Datenübertragungsraten-Anpassungseinheit ferner umfasst:

eine Bandbreitenprüfungs-Subeinheit, die ausgestaltet ist, um die Datenübertragungsrate der stromaufwärtigen Netzentität gemäß einem vorbestimmten Algorithmus um eine entsprechende Schrittlänge zu erhöhen, wenn die stromaufwärtige Netzentität Daten mit einer Rate, die größer als die oder gleich der normalen Rate ist, für eine bestimmte Zeitdauer überträgt und die Datenübertragungsrate erhöht werden muss.

## Revendications

1. Procédé de gestion d'encombrement dans un réseau, le réseau comprenant une entité de réseau coeur (B6) ayant une fonction de détection d'encombrement et une entité de réseau en amont (B1, B2, B3, B4, S1, S2, S3, S4) capable de répondre à un message de notification d'encombrement, le procédé comprenant les étapes suivantes qui consistent :

à envoyer (S201, S301), par le biais de l'entité de réseau coeur, lors de la détection d'un état d'encombrement, un message de notification d'encombrement à une entité de réseau en amont ;
à diminuer (S202, S302), par le biais de l'entité de réseau en amont, son débit de transmission de données d'une certaine longueur de pas en fonction du message de notification d'encombrement reçu, et en même temps à réinitialiser (S202, S302) une minuterie ou un compteur pour compter un nombre de paquets de données ;
à déclencher (S203) l'entité de réseau en amont pour entrer dans une phase de restauration de débit lorsque la minuterie ou le compteur subit un dépassement de capacité ;

**caractérisé en ce que** :

la phase de restauration de débit comprend une sous-phase de restauration rapide, qui comporte N cycles, et, dans chaque cycle, l'entité de réseau en amont augmente son débit de transmission de données actuel d'une longueur de pas correspondante en fonction d'un algorithme prédéterminé, où, dans chaque cycle, ledit algorithme augmente le débit de transmission de données actuel jusqu'à 1/2 x (le débit de transmission de données avant la dernière diminution + le débit de transmission de données actuel).

2. Procédé selon la revendication 1, dans lequel, une valeur de dépassement de capacité de la minuterie ou du compteur est spécifiquement configurée en fonction d'une probabilité minimale de détection d'encombrement du réseau et/ou d'une exigence d'ajustement de débit du réseau.

3. Procédé selon la revendication 1, dans lequel, lorsque l'entité de réseau en amont reçoit le message de notification d'encombrement après la réinitialisation de la minuterie ou du compteur et avant le dépassement de capacité de la minuterie ou du compteur, l'entité de réseau en amont diminue son débit de transmission de données d'une certaine longueur de pas à nouveau en fonction du message de notification d'encombrement reçu et réinitialise en même temps la minuterie ou le compteur pour compter le nombre de paquets de données à nouveau.

4. Procédé selon la revendication 1, dans lequel, la phase de restauration de débit comprend en outre une sous-phase d'augmentation initiale ; l'entité de réseau en amont entre dans la sous-phase d'augmentation initiale après l'achèvement des cycles dans la sous-phase de restauration rapide ; la sous-phase d'augmentation initiale comprend M cycles, et, dans chaque cycle, l'entité de réseau en amont augmente son débit de transmission de données d'une longueur de pas correspondante en fonction d'un algorithme prédéterminé.

5. Procédé selon la revendication 1 ou 4, dans lequel la longueur de pas correspondante augmentée en fonction d'un algorithme prédéterminé est : une longueur de pas calculée en fonction de l'algorithme prédéterminé au cours de chaque temps d'augmentation de débit pour restaurer progressivement le débit de transmission de données à une valeur normale prédéterminée ou pour restaurer progressivement à une certaine valeur prédéterminée initialement.

6. Procédé selon la revendication 1 ou 4, dans lequel, pour les N cycles inclus dans la sous-phase de restauration rapide et les M cycles inclus dans la sous-phase d'augmentation initiale, un intervalle entre les cycles est une période de temps entre la réinitialisation et le dépassement de capacité de la minuterie ou du compteur ; la période de temps entre la réinitialisation et le dépassement de capacité de la minuterie ou du compteur est configurée de manière spécifique en fonction de la probabilité minimale de détection d'encombrement du réseau et/ou de l'exigence d'ajustement de débit du réseau.

7. Système de gestion d'encombrement dans un réseau, le réseau comprenant une entité de réseau en amont (B1, B2, B3, B4, S1, S2, S3, S4) et une entité de réseau coeur (B6) pour faire converger des données transmises par l'entité de réseau en amont, le système comprenant :

   une unité de détection d'encombrement, qui est configurée pour vérifier l'état d'encombrement du réseau et pour envoyer un message de notification d'encombrement à l'entité de réseau en amont lors de la détection d'un état d'encombrement ;
   une unité de réponse au message de notification d'encombrement, qui est configurée pour réinitialiser une minuterie ou un compteur pour compter un nombre de paquets de données en fonction du message de notification d'encombrement reçu ;
   une unité d'ajustement de débit de transmission de données, qui est configurée pour diminuer un débit de transmission de données après que l'entité de réseau en amont reçoit le message de notification d'encombrement envoyé par l'entité de réseau coeur ou pour augmenter le débit de transmission de données de l'entité de réseau en amont d'une longueur de pas correspondante en fonction d'un algorithme prédéterminé lorsque la minuterie ou le compteur subit un dépassement de capacité,

   dans lequel l'unité d'ajustement de débit de transmission de données comprend :

   une sous-unité de limitation de débit, qui est configurée pour diminuer le débit de transmission de données après que l'entité de réseau en amont reçoit la notification d'encombrement envoyée par l'entité de réseau coeur ;

   **caractérisé par** :

   une sous-unité de restauration de débit de transmission de données, qui est configurée pour augmenter un débit de transmission de données actuel de l'entité de réseau en amont d'une longueur de pas correspondante en fonction d'un algorithme prédéterminé lorsque la minuterie ou le compteur subit un dépassement de capacité et avant la restauration du débit de transmission de données à un débit normal prédéterminé, et pour réinitialiser en même temps la minuterie ou le compteur à nouveau, où ledit algorithme augmente le débit de transmission de données actuel jusqu'à 1/2 x (le débit de transmission de données avant la dernière diminution + le débit de transmission de données actuel).

8. Système selon la revendication 7, dans lequel l'unité d'ajustement de débit de transmission de données comprend en outre :

   une sous-unité de sondage de largeur de bande, qui est configurée pour augmenter le débit de transmission de données de l'entité de réseau en amont d'une longueur de pas correspondante en fonction d'un algorithme prédéterminé lorsque l'entité de réseau en amont transmet des données à un débit supérieur ou égal au débit normal pendant une certaine période de temps et que le débit de transmission de données doit être augmenté.

Congestion detection

FIG. 1

FIG. 2

When detecting a network congestion, the core network entity sending a congestion notification message to the upstream network entity — S301

↓

After receiving the congestion notification message, the upstream network entity decreasing data transmission rate, and meanwhile resetting the timer or counter — S302

↓

S303
Is a congestion notification message received? — YES

NO
↓

S304
Does the timer or counter expire? — NO

YES
↓

The upstream network entity increasing the data transmission rate, recording the number of times of adjustment and resetting the timer or counter — S305

↓

S306
Is a congestion notification message received? — YES

NO
↓

S307
Is the adjustment made for N times? — NO

YES
↓

Restoring the data transmission rate ending, and waiting to further increase the data transmission rate when needed — S308

## FIG. 3

When the bandwidth restoring flow is over or no congestion notification message is received within a set period of time (the duration T2 for weighing feasibility of probing) during normal operation of the network, entering a bandwidth probing stage — S401

Tentatively increasing the current data transmission rate to probe the current available bandwidth, and resetting the timer/counter for bandwidth probing — S402

S403 — Is a congestion notification message received?

YES

NO

Does the timer or counter expire? — S404

NO

YES

Returning to the processing steps after receiving the congestion notification message in the method for congestion management

## FIG. 4

The upstream network entity decreasing the data transmission rate according to the congestion notification message

The stage for restoring the data transmission rate after the congestion is judged to have been removed

Rate

10Gbps

Congestion

5Gbps

Congestion removed

Time

## FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007081454 A1